(19) Europäisches Patentamt
European Patent Office
Office européen des brevets

(11) **EP 4 583 356 A1**

(12) **EUROPEAN PATENT APPLICATION**
published in accordance with Art. 153(4) EPC

(43) Date of publication:
09.07.2025 Bulletin 2025/28

(21) Application number: 23870151.0

(22) Date of filing: 31.08.2023

(51) International Patent Classification (IPC):
*H02J 7/00* (2006.01)  *H02M 3/155* (2006.01)
*H02M 1/088* (2006.01)  *H02M 1/14* (2006.01)

(52) Cooperative Patent Classification (CPC):
Y02E 60/10

(86) International application number:
PCT/CN2023/116307

(87) International publication number:
WO 2024/066911 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211219724

(71) Applicant: ZTE CORPORATION
Shenzhen, Guangdong 518057 (CN)

(72) Inventors:
• LIU, Mingming
  Shenzhen, Guangdong 518057 (CN)
• XIONG, Yong
  Shenzhen, Guangdong 518057 (CN)
• HU, Xianhong
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **SMART BATTERY MANAGEMENT SYSTEM AND METHOD, AND ELECTRONIC DEVICE AND READABLE STORAGE MEDIUM**

(57) The present application belongs to the field of smart batteries. Disclosed are a smart battery management system and method, and an electronic device and a readable storage medium. The smart battery management system of the present application comprises a BCMU component and a plurality of power source operation groups, wherein the power source operation groups are connected to the BCMU component, the power source operation groups are used for being connected to a busbar in parallel, each power source operation group comprises a bidirectional DCDC module and a plurality of battery modules, and the battery modules are connected to the BCMU component; and the battery modules are connected to an input end of the bidirectional DCDC module in parallel, an output end of the bidirectional DCDC module is used for being connected to the busbar, and the battery modules reuse the bidirectional DCDC module by means of polling.

Fig. 1

EP 4 583 356 A1

**Description**

CROSS-REFERENCE TO RELATED APPLICATIONS

The present application claims the priority of the Chinese patent application No. 202211219724.6 filed on September 30, 2022, of which the entire contents are incorporated herein by reference.

TECHNICAL FIELD

The present application relates to the field of smart batteries, in particular to a smart battery management system and method, an electronic device and a readable storage medium.

BACKGROUND

As an uninterruptible power supply technical means, batteries are widely applied in various fields such as communication, power, and finance. With the arrival of the 5G era, the rapid digital transformation of the human society is promoted. However, the comprehensive reform of a 5G network architecture poses severe challenges to communication energy. For example, how to better provide a safe, economical, and stable power source to 5G base stations will become an important factor affecting the speed of 5G construction.

At present, various communication device manufacturers or battery manufacturers manage the energy of computer rooms in 5G sites by adopting a smart lithium battery energy-storage management system (i.e. a smart battery management system). The smart battery management system is to embed bidirectional direct current/direct current (DC/DC) topology circuits and digital signal processor (DSP) control circuits in traditional lithium batteries, and package them to form a smart system. However, under actual working conditions, it is difficult for battery cells and bidirectional DC/DC topology in the traditional lithium batteries to operate simultaneously at a maximum efficiency point of the system, resulting in relatively-large losses and reduced energy efficiency, and seriously increasing the energy supply cost of an entire communication network.

SUMMARY

The main objective of the present application is to provide a smart battery management system and method, an electronic device and a readable storage medium, aimed at solving the technical problem of low system energy efficiency in the smart battery management system.

To achieve the above objective, the present application provides a smart battery management system, including a BCMU component and a plurality of power source operation groups, wherein the power source operation groups are respectively connected to the BCMU component, the power source operation groups are used to be connected to a busbar in parallel, and each power source operation group includes:

a plurality of battery modules, wherein the battery modules are respectively connected to the BCMU component; and
a bidirectional DCDC module, wherein the battery modules are connected to an input end of the bidirectional DCDC module in parallel, an output end of the bidirectional DCDC module is used to be connected to the busbar, and the battery modules reuse the bidirectional DCDC module by means of polling.

In addition, to achieve the above objective, the present application provides a smart battery management system, the smart battery management method is applied to the smart battery management system as described above, and the smart battery management method includes:

acquiring a current demand load and determining the minimum operation group starting number of power source operation groups that meet and support the current demand load;
determining a starting number alternative range for the power source operation groups according to the minimum operation group starting number;
determining system energy efficiency of the smart battery management system that is mapped by each operation group starting number within the starting number alternative range; and
selecting the operation group starting number with the highest system energy efficiency within the starting number alternative range as the optimal operation group starting number, and starting and running power source operation groups with the optimal operation group starting number to supply power to a busbar.

In addition, to achieve the above objective, the present application further provides an electronic device, the electronic device includes the smart battery management system as described above, a memory, a processor, and a smart battery management program stored on the memory and able to be run on the processor, and the smart battery management program, when executed by the processor, implements steps of the smart battery management method as described above.

In addition, to achieve the above objective, the present application further provides a readable storage medium, the readable storage medium is a computer readable storage medium, the computer readable storage medium stores a smart battery management program thereon, and the smart battery management program, when executed by a processor, implements steps of the smart battery management method as described above.

BRIEF DESCRIPTION OF DRAWINGS

In order to illustrate technical solutions in embodiments of the present application or the prior art more clearly, accompanying drawings needing to be used in descriptions of the embodiments or the prior art will be introduced below briefly. Apparently, the accompanying drawings in the descriptions below are only some embodiments of the present application, and those ordinarily skilled in the art may further obtain other accompanying drawings according to structures shown by these accompanying drawings without creative efforts.

Fig. 1 is a schematic structural diagram of a first embodiment of a smart battery management system of the present application;

Fig. 2 is a partial schematic structural diagram of a second embodiment of a smart battery management system of the present application;

Fig. 3 is a partial schematic structural diagram of a third embodiment of a smart battery management system of the present application;

Fig. 4 is a schematic diagram of a system architecture of an embodiment of a smart battery management system of the present application;

Fig. 5 is a schematic flow diagram of a first embodiment of a smart battery management method of the present application;

Fig. 6 is a topology structure diagram of an embodiment of a bidirectional DCDC module of the present application; and

Fig. 7 is a schematic structural diagram of an electronic device involved in solutions of an embodiment of the present application.

The objective implementation, functional characteristics, and advantages of the present application will be further explained in conjunction with the embodiments and with reference to the accompanying drawings.

Descriptions of reference numerals of the accompanying drawings:

| Reference numeral | Name | Reference numeral | Name |
|---|---|---|---|
| 100 | Smart battery management system | 212 | BMU |
| 1 | BCMU component | 213 | Charge-discharge loop switch |
| 2 | Power source operation group | 22 | Bidirectional DCDC module |
| 21 | Battery module | 221 | DCDC conversion unit |
| 211 | Battery cell unit | 222 | DSP control unit |

DETAILED DESCRIPTION

It should be understood that specific embodiments described here are only used to explain the present application, and are not used to limit the present application.

Technical solutions in the embodiments of the present application will be clearly and completely described in the following in combination with accompanying drawings in the embodiments of the present application. Apparently, the described embodiments are only some rather than all of the embodiments of the present application. All other embodiments obtained by those ordinarily skilled in the art based on the embodiments in the present application without making creative efforts shall fall within the scope of protection of the present application.

It should be noted that all directional indications (such as upper, lower, left, right, front, back, etc.) in the embodiments of the present application are only used to explain relative position relationships, motion situations, etc. among the components in a specific posture (as shown in the accompanying drawings). If the specific posture changes, the directional indications will also change accordingly.

In the present application, unless otherwise expressly specified and limited, terms such as "connect" and "fix" should be broadly understood, for example, "fix" may be a fixed connection or a detachable connection or integration; or may be a mechanical connection or an electrical connection; or may be a direct connection or an indirect connection through an intermediate medium, or may be a communication between interiors of two elements or an interaction relationship of two elements, unless otherwise expressly specified. For those of ordinary skill in the art, specific meanings of the above terms in the present application can be understood according to specific situations.

In addition, descriptions of "first", "second", etc. in the present application are only used for descriptive purposes, and cannot be understood as indicating or implying relative importance or implicitly indicating the number of indicated technical features. Therefore, the features defined as "first" and "second" may explicitly or implicitly include at least one of the features. In addition, the technical solutions between various embodiments can be combined with each other, but the combination must be based on the ability of implementation by those ordinarily skilled in the art. When the combination of the technical solutions is contradictory or cannot be implemented, it should be considered that the combination of the technical solutions does not exist and does not fall within the scope of protection required by the present application.

The key technology of a smart battery management system is to embed a bidirectional DC/DC topology circuit and a control system in traditional batteries, and package them to form a smart system, thereby reducing the complexity of lithium battery applications and isolating an internal battery cell and an external load. A battery cell can be subjected to free charge-discharge control and management in an "ideal internal environment as much as possible", so that through highly-flexible software defined output characteristics, the battery cell can be intelligently adapted, efficiently coordinated, and intelligently dispatched with other systems such as power supply, energy storage, electricity utilization, and temperature control, thereby achieving safe, economic, green, and efficient management of energy in a computer room of a site.

However, a current smart battery management system is to embed a bidirectional direct current/direct current (DC/DC) topology circuit and a digital signal processor (DSP) control circuit in a traditional lithium battery, and package them to form a smart system. Under actual working conditions, it is difficult for the battery cell and the bidirectional DC/DC topology in the traditional lithium battery to operate simultaneously at a maximum efficiency point of the system, resulting in relatively-large losses and reduced energy efficiency, and seriously increasing the energy supply cost of an entire communication network.

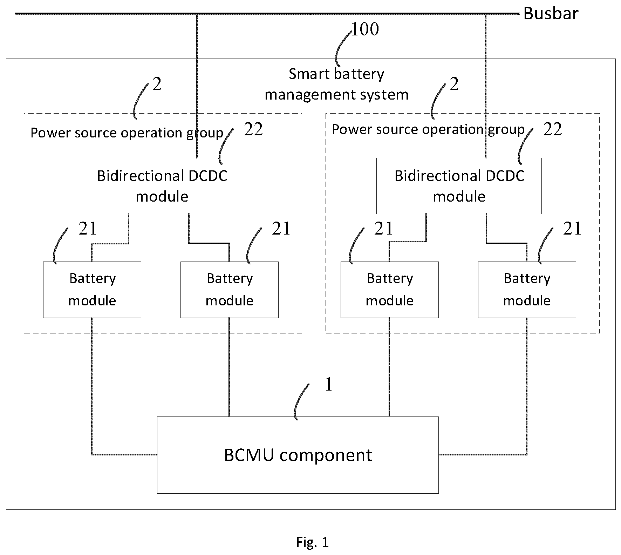

In addition, an embodiment of the present application further provides a smart battery management system 100. Referring to Fig. 1, Fig. 1 is a schematic structural diagram of an embodiment of the smart battery management system 100 of the present application.

In the present embodiment, the smart battery management system 100 includes a BCMU component 1 and a plurality of power source operation groups 2, the power source operation groups 2 are respectively connected to the BCMU component 1, the power source operation groups 2 are used to be connected to a busbar in parallel, and each power source operation group 2 includes:

    a plurality of battery modules 21, the battery modules 21 being respectively connected to the BCMU component 1; and
    a bidirectional DCDC module 22, the battery modules 21 being connected to an input end of the bidirectional DCDC module 22 in parallel, an output end of the bidirectional DCDC module 22 being used to be connected to the busbar, and the battery modules 21 reusing the bidirectional DCDC module 22 by means of polling.

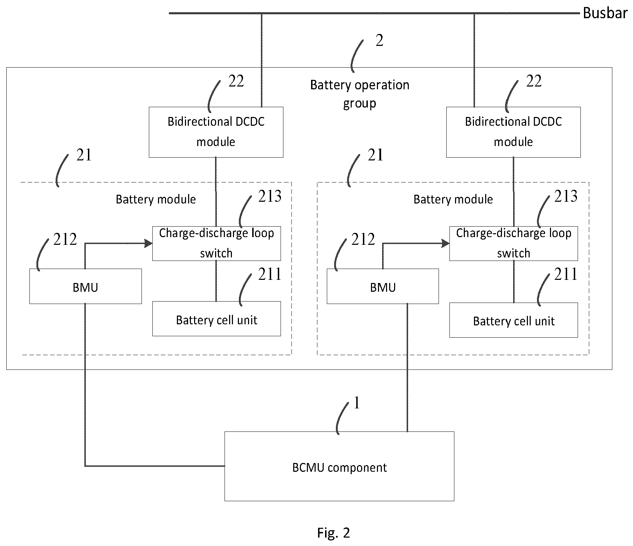

In the present embodiment, referring to Fig. 2, the battery modules 21 may include battery cell units 211 and battery management units (BMUs) 212. Those skilled in the art can understand that the BMUs 212 are first levels of the battery management system (BMS), and are management units that manage an individual battery in a series of batteries (a battery pack or a battery cluster). The BMUs 212 may also be referred to as the BMSs in the battery modules 21, mainly implementing monitoring and balancing functions. Each battery module 21 is configured with a BMU to monitor a battery state (such as a current, voltage, temperature and electric quantity) of the battery module. The battery cluster management unit (BCMU) component 1 is a second level of the BMS, and manages N series and parallel battery packs (N is a positive integer). The BCMU component 1 can acquire various parameters of each battery module 21 in each battery pack through the BMU 212 on the battery module 21. That is, the BCMU component 1 is mainly used to monitor state information (a voltage, current, temperature, electric quantity, etc.) of the battery cluster and each battery, perform unified management on the charge-discharge process, perform alarm and emergency protection processing on possibly appearing faults, and ensure the safe, reliable, and stable running of the battery cluster.

The bidirectional DCDC modules 22 are bidirectional modules that convert a direction current power source of a certain voltage level into a direction current power source of other voltage levels, which can discharge or charge the battery modules 21, and solve the problem that the voltage is difficult to adjust after the voltage is high in a single charging mode. The combined adjustment of charging and discharging is used to improve the efficiency and effect of balanced maintenance, and achieve the effect of balanced improvement.

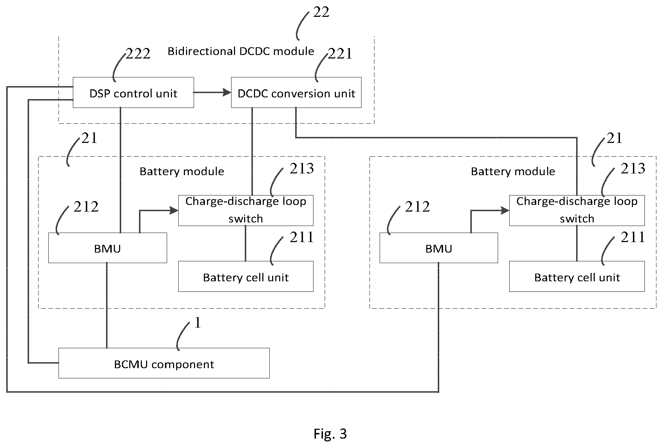

In the present embodiment, referring to Fig. 3, the bidirectional DCDC modules 22 may include DCDC (direct current) conversion units 221 and digital signal process (DSP) control units 222. Those skilled in the art can understand that the DCDC conversion units 221 are direct current-direct current conversion units that can convert a fixed direct-current voltage into a variable direct-current voltage.

The battery modules 21 reuse the bidirectional DCDC modules 22 by means of polling, which refers to that the plurality of battery modules 21 reuse one bidirectional DCDC module 22 by means of polling in a manner of time-division multiplexing. The plurality of battery modules 21 are connected in parallel, and alternately share/reuse one bidirectional DCDC module 22, thus a utilization rate of DC/DC power conversion is increased, and the hardware investment cost is also greatly reduced. Moreover, the battery modules 21 run in turn to ensure that all the battery modules 21 can participate in running, thereby improving the balance and consistency of the battery modules 21 under a long-term low current operation condition. In addition, in the present embodiment, the plurality of battery modules 21 reuse one bidirectional DCDC module 22 by means of polling, that is, the battery modules 21 run in turn, which indirectly reduces the actual running time of each battery module 21, thereby prolonging the service life of the battery modules 21 and improving the reliability of the smart battery management system 100.

The battery modules 21 may be lithium batteries. Output ends of the plurality of battery modules 21 are electrically connected in parallel (forming a battery cluster) and then connected to one end of the external bidirectional DCDC module 22, thereby forming a power source operation group 2. The other end of the bidirectional DCDC module 22 may be used to be connected to a busbar (such as a 48V busbar). The plurality of power source operation groups 2 may be connected to the busbar in parallel through the configured bidirectional DCDC modules 22, and the power source operation groups 2 are respectively connected to the BCMU component 1. The BCMU component 1 may perform unified control and management on the DSP control units 222 in the bidirectional DCDC modules 22 and the BMUs 212 in the battery modules 21 through a controller area network (CAN), that is, the BCMU component 1 may independently control running parameters of the power source operation groups 2, so that the plurality of parallel power source operation groups 2 form a centralized power conversion subsystem.

According to the technical solution of the embodiment of the present application, the smart battery management system 100 is set as the BCMU component 1 and the plurality of power source operation groups 2, the power source operation groups 2 are respectively connected to the BCMU component 1, the power source operation groups 2 are used to be connected to the busbar in parallel, each power source operation group 2 includes the bidirectional DCDC module 22 and the plurality of battery modules 21, and the battery modules 21 are respectively connected to the BCMU component 1; and the battery modules 21 are connected to the input end of the bidirectional DCDC module 22 in parallel, the output end of the bidirectional DCDC module 22 is used to be connected to the busbar, and the battery modules 21 reuse the bidirectional DCDC module 22 by means of polling.

Compared to a current manner of embedding a bidirectional DCDC module 22 (including a DCDC conversion topology circuit and a DSP control circuit) in a battery module 21, in the embodiment of the present application, the bidirectional DCDC module 22 originally built-in the battery module is separated to form an externalizable module, so that the number of the external bidirectional DCDC modules 22 can be configured flexibly according to a load situation of the site/computer room, rather than requiring each battery module 21 to be equipped with one bidirectional DCDC module 22, which greatly reduces the investment cost of configuration and enables subsequent direct capacity expansion to be very easy. The battery modules 21 reuse one bidirectional DCDC module 22 in a grouping manner, and a strong coupling relationship of one-to-one matching between the battery cells and bidirectional DCDC topologies in the battery modules 21 is eliminated, thereby reducing the hardware cost while increasing the utilization rate of power conversion and reducing energy efficiency waste. By modifying an architecture of a traditional smart battery system, the battery cells and the bidirectional DCDC modules 22 can be flexibly combined and matched, so that the battery cells and the bidirectional DCDC modules 22 operate under the optimal energy efficiency working condition of the system, which solves the problem of relatively-large losses and reduced energy efficiency caused by the fact that the battery modules 21 and the bidirectional DCDC modules 22 are difficult to operate at the optimal efficiency point under the actual working conditions for various communication smart lithium battery systems at present. As a result, the embodiment of the present application improves the system energy efficiency of the smart battery management system 100 and solves the technical problem of low system energy efficiency of the smart battery management system 100.

In the present embodiment, the number of the bidirectional DCDC modules 22 as well as the number of the battery modules 21 in the smart battery management system 100, and the ratio of the bidirectional DCDC modules 22 to the battery modules 21 can be flexibly configured according to the load of the site and user demands. To facilitate understanding, a specific embodiment is listed:

1) initial configuration of the bidirectional DCDC modules 22: configuration is performed according to a peak load of the site and the power specifications of a DC/DC single module. If the load peak power consumption of the site is 20 kW and the single bidirectional DCDC module is 226 kW, at least 4 modules need to be configured.

2) Initial configuration of the battery modules 21: configuration is performed according to a standby power time. If the load peak power consumption of the site is 20kW, 10 hours of standby power is required, and at least 42 battery modules with 48V/100Ah and a maximum discharge capacity of 1C need to be configured.

3) Grouping initial configuration: grouping is performed according to the initially-configured number of DC/DC and the battery modules 21. As before, if the ratio of the DC/DC to the battery modules 21 is 4:42, grouping is performed according to 1:11. That is, every 11 battery modules 21 share one bidirectional DCDC module 22.

4) Adjustment configuration: the number of the DC/DC and the battery modules 21 is adjusted to ensure optimal configuration under the premise of N+1 redundant backup. When a certain bidirectional DCDC module 22 fails, all the battery modules 21 in the same group will also be unable to operate, which may result in insufficient standby power; and therefore, it is necessary to appropriately increase the configuration of the batteries or the bidirectional DCDC modules 22. Therefore, the following adjustment may be performed: the configuration ratio of the bidirectional DCDC module 22 to the battery modules 21 is 6:48, and grouping is performed according to 1:8.

According to the present specific embodiment, the bidirectional DCDC modules 22 are separated from an original smart lithium battery, thereby eliminating the strong coupling relationship of one-to-one correspondence between the battery cells and the bidirectional DCDC modules 22, achieving free combination, and solving various problems of relatively-large losses and reduced energy efficiency caused by the fact that the battery cells, the bidirectional DCDC modules 22, etc. are difficult to operate at the optimal efficiency under the actual working conditions for various communication smart lithium battery systems at present, and more energy waste caused by excessive DC/DC configuration. The present specific embodiment achieves a smart, fast, and accurate method and apparatus for improving the energy efficiency of the communication smart lithium battery system through the time-division multiplexing of the bidirectional DCDC modules 22.

The above specific embodiment is only used to assist in understanding the technical concept of the embodiments of the present application and does not constitute a limitation on the present application. More forms of simple transformations based on the technical concept should fall within the scope of protection of the present application.

Based on the first embodiment of the smart battery management system 100, a second embodiment of the smart battery management system 100 is provided. Please refer to Fig. 2, in the second embodiment, the battery modules 21 include the battery cell units 211 and the BMUs 212, the BMUs 212 are connected to the BCMU component 1, the battery cell units 211 in the battery modules 21 are connected to the input ends of the bidirectional DCDC modules 22 in parallel, and the BCMU component 1 controls operation states of the battery cell units 211 through the BMUs 212.

Exemplarily, the battery modules 21 may be lithium batteries.

Those skilled in the art can understand that the battery cell units 211 are equivalent to the hearts of the battery modules 21, and the battery management system (BMU) units 212 are equivalent to the brains of the battery modules 21.

In the present embodiment, the operation states of the battery cell units 211 may include a sleep state or a running state. The BCMU component 1 controls and manages the BMUs 212 through the CAN, and then indirectly controls the operation states of the battery cell units 211 to switch to the sleep state or the running state through BMUs 212.

Exemplarily, a BMU 212 of a first battery module 21 may directly control an operation state of a battery cell unit 211 of the first battery module 21, a BMU unit 212 of a second battery module 21 may directly control an operation state of a battery cell unit 211 of the second battery module 21, and a BMU unit 212 of a third battery module 21 can directly control an operation state of a battery cell unit 211 of the third battery module 21. Therefore, the BCMU component 1 can independently control the operation states of the battery cell unit 211 of the first battery module 21, the battery cell unit 211 of the second battery module 21, and the battery cell unit 211 of the third battery module 21 by sending control signals to the BMU 212 of the first battery module 21, the BMU 212 of the second battery module 21, and the BMU 212 of the third battery module 21.

In the present embodiment, the battery modules 21 are set as the battery cell units 211 and the BMUs 212, the BMUs 212 are connected to the BCMU component 1, and the battery cell units 211 in the battery modules 21 are connected to the input ends of the bidirectional DCDC modules 22 in parallel, so as to achieve unified control and management of the BMUs 212 in the battery modules 21 through the BCMU component 1. Therefore, through unified management and control over the BMUs 212 by the BCMU component 1, the operation states of the battery cell units 211 are indirectly and independently controlled, and then by independently controlling the operation states of the battery cell units 211, the objective of adjusting the running parameters (such as output power) of the power source operation groups 2 can be achieved.

In one possible implementation, the battery modules 21 include charge-discharge loop switches 213, the charge-discharge loop switches 213 are connected between the battery cell units 211 and the bidirectional DCDC modules 22 in series, and the BMUs 212 control the operation states of the battery cell units 211 by controlling switch-off or switch-on of the charge-discharge loop switches 213.

In the present embodiment, since the charge-discharge loop switches 213 are connected between the battery cell units 211 and the bidirectional DCDC modules 22 in series, and the output ends of the bidirectional DCDC modules 22 are used to be connected to the busbar, when the charge-discharge loop switches 213 are in a switch-on state, power source signals of the battery cell units 211 can be converted by the voltage of the bidirectional DCDC modules 22 to supply power to the busbar (i.e., a discharge scenario of the battery cell units 211), or power source signals from the busbar are converted by the voltage of the bidirectional DCDC modules 22 to charge the battery cell units 211 (i.e., a charging scenario of the battery cell units 211). When the charge-discharge loop switches 213 are in a switch-off state, the battery cell units 211 connected with the charge-discharge loop switches 213 in series cannot provide the power to the busbar or provide the load to the busbar. It is easy to understand that the BMUs 212 can be used to control the switch-off or switch-on of the charge-discharge loop switches 213, so as to control the operation states of the battery cell units 211 to switch to the running state or the sleep state, thereby achieving the objective of adjusting the running parameters (such as the output power) of the battery modules 21.

The operation states of the battery cell units 211 may include the charging scenario and the discharging scenario of the battery cell units 211.

Exemplarily, the BMU 212 of the first battery module 21 may control the operation state of the battery cell unit 211 of the first battery module 21 by controlling the switch-off or switch-on of the charge-discharge loop switch 213 in the first battery module 21. The BMU 212 of the second battery module 21 may control the operation state of the battery cell unit 211 of the second battery module 21 by controlling the switch-off or switch-on of the charge-discharge loop switch 213 in the second battery module 21. The BMU 212 of the third battery module 21 may control the operation state of the battery cell unit 211 of the third battery module 21 by controlling the switch-off or switch-on of the charge-discharge loop switch 213 in the third battery module 21. Therefore, the BCMU component 1 may send control signals through the BMU 212 of the first battery module 21, the BMU 212 of the second battery module 21, and the BMU 212 of the third battery module 21, so as to control the charge-discharge loop switch 213 of the first battery module 21, the charge-discharge loop switch 213 of the second battery module 21 and the charge-discharge loop switch 213 of the third battery module 21, so that the BCMU component 1 can manage the operation states of the battery cell unit 211 of the first battery module 21, the battery cell unit 211 of the second battery module 21, and the battery cell unit 211 of the third battery module 21 in a unified manner.

The BMUs 212 are connected to the BCMU component 1, and the BCMU component 1 can achieve the objective of independently controlling the operation states of the battery cell units 211 through unified management and control over the BMUs 212. The BCMU component 1 can perform balanced control over the running parameters (such as a charge-discharge voltage, a charge-discharge current, charge-discharge power, and a load factor) of each battery cell unit 211 according to real-time battery state information collected by the BMUs 212, so as to complete smart management of the running parameters in the charging and discharging scenarios.

Based on the above embodiment of the smart battery management system 100, a third embodiment of the smart battery management system 100 is provided. Please refer to Fig. 3, in the third embodiment, the bidirectional DCDC modules 22 are connected to the BCMU component 1, the bidirectional DCDC modules 22 include the DCDC conversion units 221 and the DSP control units 222, the BMUs 212 are respectively connected to the DSP control units 222, the DSP control units 222 are connected to the BCMU component 1, the battery cell units 211 in the battery modules 21 are connected to input ends of the DCDC conversion units 221 in parallel, output ends of the DCDC conversion units 221 are used to be connected to the busbar, and the battery cell units 211 in the battery modules 21 reuse the DCDC conversion units 221 by means of polling.

In the present embodiment, the bidirectional DCDC modules 22 include the DCDC conversion units 221 and the DSP control units 222. Those skilled in the art can understand that the DCDC (direct current) conversion units are direct current-direct current conversion units that can convert a fixed direct-current voltage into a variable direct-current voltage. The digital signal process (DSP) control units 222 may control the running parameters (such as a voltage difference ratio and the load factor) of the DCDC conversion units 221.

The BCMU component 1 may perform unified control and management on the DSP control units 222 in the bidirectional DCDC modules 22 and the BMUs 212 in the battery modules 21 through the controller area network (CAN). That is, the BCMU component 1 may independently control the running parameters of the power source operation groups 2 respectively, so that the plurality of parallel power source operation groups 2 form the centralized power conversion subsystem.

In the present embodiment, the BMUs 212 may be connected to the DSP control units 222 through the CAN, and then the DSP control units 222 may be connected to the BCMU component 1 through the CAN. Of course, the BMUs 212 may also be directly connected to the BCMU component 1 through the CAN, the battery cell units 211 in the battery modules 21 are connected to the input ends of the DCDC conversion units 221 in parallel, so that the BCMU component 1 can perform unified control and management on the BMUs 212 in the battery modules 21 so as to indirectly and independently control the running parameters (such as the charge-discharge voltage, the charge-discharge current, the charge-discharge power and the load factor) of the battery cell units 211, and the DSP control units 222 in the bidirectional DCDC modules 22 can be controlled through the BCMU component 1 so as to indirectly control the running parameters (such as the voltage difference ratio and the load factor) of the DCDC conversion units 221.

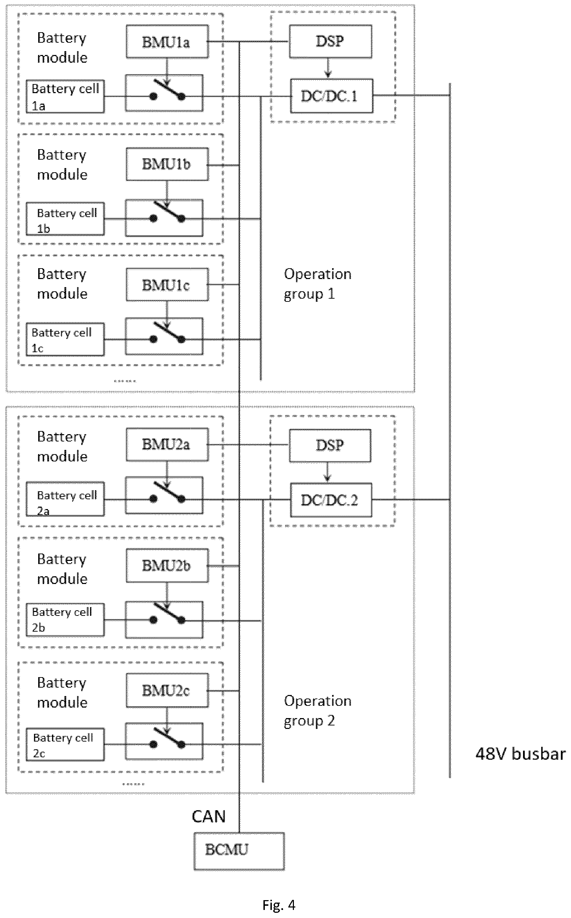

In order to facilitate the understanding of the technical principles of the embodiment of the present application, a specific embodiment is listed below: the smart battery management system is further described in detail below in conjunction with the accompanying drawings. Please refer to Fig. 4, Fig. 4 is a schematic structural diagram of an architecture of a smart battery management system in a specific embodiment of the present application:

In the present specific embodiment, the architecture of the smart battery management system is a smart lithium battery system architecture, and the smart lithium battery system architecture includes a BCMU and a plurality of operation groups (also known as power source operation groups), such as an operation group 1 and an operation group 2 in Fig. 4. The operation groups are connected to the BCMU through a CAN, and the operation groups are further used to be connected to a 48V busbar in parallel. Each operation group includes a bidirectional DCDC module and a plurality of battery modules, and each bidirectional DCDC module includes a DC/DC (also known as a DCDC conversion unit) and a DSP. The battery modules are connected to the BCMU, battery cells in the battery modules are connected to an input end of the DC/DC in parallel, the BCMU controls an operation state of a battery cell unit through a BMU, an output end of the DC/DC is used to be connected to the 48V busbar, and the battery modules reuse the DC/DC by means of polling in a manner of time-division multiplexing. The battery modules include the battery cells, the BMUs and charge-discharge loop switches, the charge-discharge loop switches are connected between the battery cells and the DC/DC in series, and the BMUs control the operation states of the battery cell units by controlling switch-off or switch-on of the charge-discharge loop switches. The DC/DC is connected to the BCMU, the BMUs are connected to the DSP, and the DSP is connected to the BCMU.

In the present specific embodiment, the DC/DC conversion unit and a DSP control part are separated to form an external and independent DC/DC module, which is connected to the plurality of battery modules in a manner of reusing, so that the number of the external DC/DC modules can be configured according to the load situation of a site/computer room (instead of configuring one DC/DC conversion unit for each battery module according to standby power demands), thereby greatly decreasing the initial configuration number and enabling subsequent direct capacity expansion to be very easy. For the battery modules, the plurality of battery modules are connected in parallel and form one operation group with the alternately shared/reused DC/DC module, thereby greatly increasing the utilization rate of DC/DC power conversion and greatly reducing the investment costs.

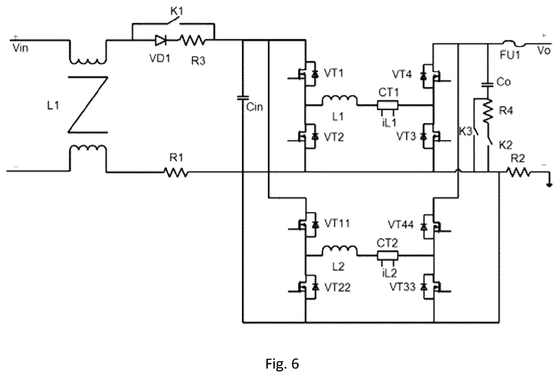

In addition, considering that the bidirectional DCDC modules operate in a light load state most of the time, the present specific embodiment may use a bidirectional staggered parallel technology and a bidirectional H-bridge non-isolated topology structure so as to further improve the energy efficiency of the bidirectional DCDC modules. As shown in Fig. 6, Vin+ and Vin- sides are connected to the system to be acted as input sides, with an operation voltage range of 42V-58V. An output side is a battery voltage, with a voltage range of 42V-56V. Energy can be transmitted bidirectionally between the input side and the output side. The input side adopts first-level common mode inductor L1 filtering, and a filtering inductor is provided with an input capacitor pre-charging circuit composed of relays K1, VD1, and R3, while achieving input anti-reverse-connection protection. VT1, VT2, VT3, VT4, L1, CT1, Cin, and Co form a first-phase bidirectional DC/DC conversion circuit, while VT11, VT22, VT33, VT44, L2, CT2, Cin, and Co form a second-phase bidirectional DC/DC conversion circuit. The two-phase circuits operate alternately by 180 degrees, CT1 and CT3 represent current sampling chips that respectively collect currents iL1 and iL2 from the inductors L1 and L2 to participate in loop control and perform current wave-by-wave protection. During the light load, one phase of conversion circuits can be turned off to improve the energy efficiency under a load, and can be turned on again during a heavy load.

The above specific embodiment is only used to assist in understanding the technical concept of the embodiment of the present application and does not constitute a limitation on the present application. More forms of simple transformations based on the technical concept should fall within the scope of protection of the present application.

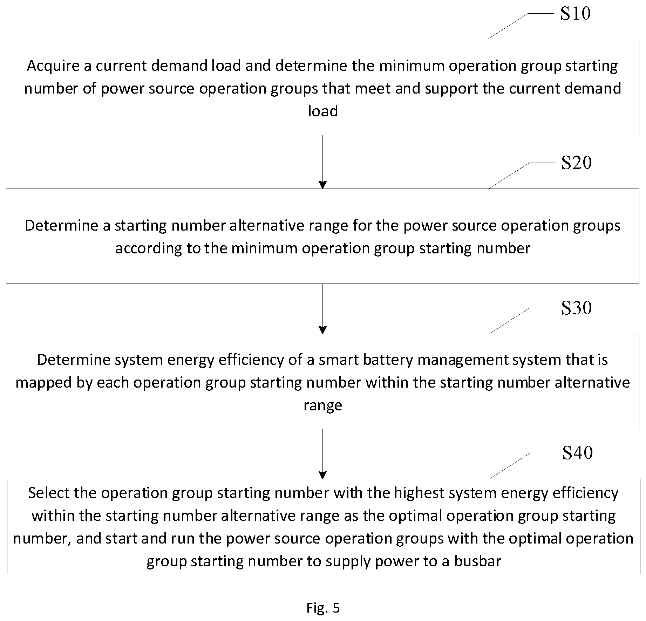

An embodiment of the present application provides a smart battery management method, and the smart battery management method is applied to the smart battery management system as described above. Referring to Fig. 5, Fig. 5 is a schematic flow diagram of an embodiment of the smart battery management method in the present application.

In the present embodiment, the smart battery management method includes:

Step S10: a current demand load is acquired, and the minimum operation group starting number of power source operation groups that meet and support the current demand load is determined.

In the present embodiment, the current demand load refers to an electricity demand load. Those skilled in the art may know that the electricity demand load of a site/computer room often varies due to different electricity demands during different electricity periods.

Those skilled in the art may know that the larger the current demand load, the greater the demanded starting number of the power source operation groups, so as to meet and support the current demand load. That is, the larger the current demand load, the greater the minimum operation group starting number of the power source operation groups that meet and support the current demand load.

Step S20: a starting number alternative range for the power source operation groups is determined according to the minimum operation group starting number.

Exemplarily, Step S20 of determining the starting number alternative range for the power source operation groups according to the minimum operation group starting number includes:

Step A10: the total operation group number of the power source operation groups in the smart battery management system is taken as the maximum operation group starting number; and

Step A20: a numerical range from the minimum operation group starting number to the maximum operation group starting number is taken as the starting number alternative range of the smart battery management system.

After Step S20, Step S30 of determining system energy efficiency of the smart battery management system that is mapped by each operation group starting number within the starting number alternative range is performed.

Those skilled in the art may know that the energy efficiency of the smart battery management system reflects an energy loss of the smart battery management system during charging and discharging processes, and can be understood as a ratio of energy released by the system to energy charged by the system, also known as cycle efficiency.

In the present embodiment, the system energy efficiency of the smart battery management system that is mapped by each operation group starting number within the starting number alternative range may be obtained by querying from a pre-stored system energy efficiency data mapping table.

Step S40: the operation group starting number with the highest system energy efficiency within the starting number alternative range is selected as the optimal operation group starting number, and power source operation groups with the optimal operation group starting number are started and run to supply power to a busbar.

On the basis of the architecture of the smart battery management system described above, the present embodiment further provides an efficiency optimization algorithm. That is, by acquiring a current demand load, the minimum operation group starting number of power source operation groups that meet and support the current demand load is determined, then a starting number alternative range for the power source operation groups is determined according to the minimum operation group starting number, system energy efficiency of the smart battery management system that is mapped by each operation group starting number within the starting number alternative range is determined, the operation group starting number with the highest system energy efficiency within the starting number alternative range is selected as the optimal operation group starting number, and power source operation groups with the optimal operation group starting number are started and run to supply power to a busbar, thus, the operation number of the power source operation groups can be configured according to the current load situation (such as a site/computer room), so that battery modules and a bidirectional DCDC module operate under an optimal energy efficiency working condition of the system, and the problem of relatively-large losses and reduced energy efficiency caused by the fact that the battery modules and the bidirectional DCDC module are difficult to operate at the optimal efficiency under the actual working conditions for various communication smart lithium battery systems at present is solved. The plurality of battery modules reuse one external bidirectional DCDC module by means of polling to form one power source operation group, then in combination with the efficiency optimization algorithm, the utilization rate of power conversion of the bidirectional DCDC module is increased, device losses in non-operation channels are eliminated, and the light load efficiency is improved, so that the bidirectional DCDC module and the battery modules in the power source operation groups achieve high efficiency in the full load range. For the entire smart battery management system, power source operation groups with the most suitable number are started and run in real time through the dynamic optimization algorithm, so as to adjust the energy efficiency of the bidirectional DCDC modules and the battery modules to the optimal energy efficiency, so that the energy efficiency of the entire system is maintained in the optimal state in real time, thereby improving the system energy efficiency of the smart battery management system in the embodiment of the present application and solving the technical problem of low system energy efficiency of the smart battery management system.

As a possible implementation, in Step S10, the step of determining the minimum operation group starting number of the power source operation groups that meet and support the current demand load includes:

Step B10: rated power of a bidirectional DCDC module is acquired, and a battery voltage and a maximum discharge current of a battery module are acquired;

Step B20: a first ratio of the current demand load to the rated power is calculated;

Step B30: a product of the battery voltage and the maximum discharge current is calculated, and a second ratio of the current demand load to the product is calculated; and

Step B40: the minimum operation group starting number of the power source operation groups that meet and support the current demand load is determined according to a maximum value between the first ratio and the second ratio.

Exemplarily, the maximum value between the first ratio and the second ratio is taken as the minimum operation group starting number of the power source operation groups that support the current demand load.

In order to dynamically adjust running parameters of the bidirectional DCDC module and the battery module according to a current running working condition of the smart battery management system, so as to achieve the highest energy efficiency of the entire system, the present embodiment first needs to calculate the minimum operation group starting number of the power source operation groups that meet and support the current demand load. To assist in understanding the principle or concept of the embodiment of the present application, Example 1 is listed:

in Example 1, after the smart battery management system is started and run, M bidirectional DCDC modules with the rated power of Pd and M*N battery modules with a rated capacity of Cr and a maximum discharge current of Ir are configured. A configuration ratio of the bidirectional DCDC modules to the battery modules is 1:N. One bidirectional DCDC module and N battery modules electrically connected to the bidirectional DCDC module are defined as one battery operation group. Assuming that the current smart battery management system is in a discharge process, the current demand load is PL, the battery voltage of the battery modules is Vb, a voltage of a busbar is Vo, and the current ambient temperature is Tb, where M and N are both positive integers. At this point, a calculation formula for the minimum operation group starting number Kmin that meets and supports the current demand load PL is:

$$Kmin=max(PL/Pd,PL/(Vb*Ir)).$$

It should be noted that Kmin should be a positive integer. Therefore, when a value of Kmin has a decimal, Kmin should be incremented by one. For example, when Kmin is 5.2, Kmin is updated to 6. For another example, when Kmin is 4.35, Kmin is updated to 5.

In the present embodiment, the rated power of the bidirectional DCDC modules, and the battery voltage and the maximum discharge current of the battery modules are acquired, then the first ratio of the current demand load to the rated power is calculated, the product of the battery voltage and the maximum discharge current is calculated, the second ratio of the current demand load to the product is calculated, and the minimum operation group starting number of the power source operation groups that meet and support the current demand load is determined according to the first ratio and the second ratio, so that the minimum operation group starting number of the power source operation groups that meet and support the current demand load is accurately calculated according to the current running working condition of the smart battery management system, which facilitates subsequent accurate obtaining of the most suitable operation number of the power source operation groups according to the calculated minimum operation group starting number, so as to adjust the energy efficiency of the bidirectional DCDC modules and the battery modules to the optimal energy efficiency, so that the energy efficiency of the entire system is maintained at the optimal state in real time.

In a possible implementation, Step S30 of determining the system energy efficiency of the smart battery management system that is mapped by each operation group starting number within the starting number alternative range includes:

Step C10: first load factors corresponding to the bidirectional DCDC modules when the power source operation groups with each operation group starting number are started are determined according to the current demand load, the rated power, and the operation group starting numbers within the starting number alternative range; and

Step C20: a rated capacity of the battery modules is acquired, and second load factors corresponding to the battery modules when the power source operation groups with each operation group starting number are started are determined according to the rated capacity, the current demand load, the battery voltage, and the operation group starting numbers within the starting number alternative range.

In the present embodiment, those skilled in the art may understand that the first load factor refers to a load rate of the bidirectional DCDC module, that is, a ratio of an actual load to a rated load of the bidirectional DCDC module. The second load factor refers to a load rate of the battery module, that is, a ratio of an actual load to a rated load of the battery module.

To assist in understanding the principle or concept of the embodiment of the present application, the following description is continued with reference to Example 1 above:

In Example 1, after calculating the minimum operation group starting number Kmin of the power source operation groups that support the current demand load PL, it is necessary to determine the starting number alternative range of the power source operation groups according to the minimum operation group starting number. By traversing the number of all the power source operation groups that can run normally (both bidirectional DCDC modules and battery modules in the power source operation groups can run normally), its value is Kmax, and thus the number range of the number of the power source operation groups from Kmin to Kmax is taken as the starting number alternative range of the smart battery management system.

Then, according to the determined starting number alternative range of the smart battery management system, the first load factor corresponding to the bidirectional DCDC modules and the second load factor corresponding to the battery modules when the power source operation groups with each numerical value within the starting number alternative range are started are calculated. In Example 1, a calculation formula for the first load factor $DZL_1$ corresponding to the bidirectional DCDC modules is:

$$DZL_1=PL/(m*Pd);$$

where, m is a numerical value within the starting number alternative range of the smart battery management system, and m is a positive integer.

A calculation formula for the second load factor $DZL_2$ corresponding to the battery modules is:

$$DZL_2=PL/(m*Vb*Cr);$$

after Step C20, Step C30 of determining the system energy efficiency of the smart battery management system that is mapped by each operation group starting number within the starting number alternative range according to the first load factors and the second load factors is performed.

Exemplarily, Step C30 of determining the system energy efficiency of the smart battery management system that is mapped by each operation group starting number within the starting number alternative range according to the first load factors and the second load factors includes:

Step D10: first module energy efficiency of the bidirectional DCDC module that is mapped by each first load factor is obtained by querying from a pre-stored first energy efficiency data mapping table.

In the present embodiment, the first module energy efficiency refers to module energy efficiency of the bidirectional DCDC module. It can be understood by those skilled in the art that the module energy efficiency of the bidirectional DCDC module refers to electrical conversion efficiency during bidirectional conversion. In general, the efficiency of the bidirectional DCDC module with the load factor ranging from 40% to 60% is often highest.

A mapping relationship of one-to-one mapping between the first load factors and the first module energy efficiency is pre-stored in the first energy efficiency data mapping table, and therefore, the first module energy efficiency of the bidirectional DCDC module that is mapped by each first load factor may be obtained by querying from the pre-stored first energy efficiency data mapping table.

Step D20: second module energy efficiency of the battery module that is mapped by each second load factor is obtained by querying from a pre-stored second energy efficiency data mapping table.

In the present embodiment, the second module energy efficiency refers to module energy efficiency of the battery module. It can be understood by those skilled in the art that the module energy efficiency of the battery module refers to conversion efficiency of the battery cell electrochemistry generally. In general, the smaller the charging and discharging current, the less heat generated, and the higher the efficiency.

It can be understood that a mapping relationship of one-to-one mapping between the second load factors and the first module energy efficiency is pre-stored in the second energy efficiency data mapping table, therefore, the first module energy efficiency of the battery module that is mapped by each second load factor may be obtained by querying from the pre-stored second energy efficiency data mapping table.

Step D30: the system energy efficiency of the smart battery management system that is mapped by each operation group starting number within the starting number alternative range is determined according to a product of the first module energy efficiency and the second module energy efficiency.

To assist in understanding the principle or concept of the embodiment of the present application, the following description is continued with reference to Example 1 above:

in Example 1, after the first load factor corresponding to the bidirectional DCDC module and the second load factor corresponding to the battery module are calculated, an efficiency value e1 (e1 is the first module energy efficiency of the DCDC module) closest to a working condition of the current ambient temperature Tb and the first load factor $DZL_1$ is searched from an energy efficiency data record table (i.e., the first energy efficiency data mapping table) of the bidirectional DCDC module, and an efficiency value e2 (e2 is the second module energy efficiency of the battery module) closest to a working condition of the second load factor $DZL_2$ is searched from an energy efficiency data record table (i.e., the second energy efficiency data mapping table) of the battery module. Then, the system energy efficiency e=e1*e2 of the smart battery management system is calculated.

In Example 1, m (m is a positive integer) can be sequentially taken as various numerical values within the starting number alternative range of the smart battery management system, such as from Kmin to Kmax, thus the system energy efficiency values corresponding to the operation group starting numbers with various numerical values from Kmin to Kmax can be calculated, the power source operation group starting number k corresponding to the maximum system energy efficiency value, that is, the optimal operation group starting number k for the optimal system efficiency of the smart battery management system, is selected from all the system energy efficiency values, and starting and running of the k bidirectional DCDC modules are controlled, wherein the load factor of each bidirectional DCDC module is PL/(Pd*k); and the other M-k bidirectional DCDC modules are shut down. At the same time, within the started and run bidirectional DCDC modules, the number of channels operating in an interleaved parallel manner is controlled, and unnecessary operation channels are closed, so that the battery module and the bidirectional DCDC module operate under the optimal energy efficiency working condition of the system, achieving running at the highest energy efficiency of the system under the working condition corresponding to the current demand load.

In Example 1, technicians can test the energy efficiency of the bidirectional DCDC module and the battery module under different working conditions during the research and development phase, and generate energy efficiency data for the bidirectional DCDC module and the battery module under different running temperatures and different load factors, thus the first energy efficiency data mapping table and the second energy efficiency data mapping table are obtained by calibration, and the first energy efficiency data mapping table and the second energy efficiency data mapping table are pre-stored in a memory of the smart battery management system.

In the present embodiment, the first load factors corresponding to the bidirectional DCDC modules when the power source operation groups with each operation group starting number are started are determined according to the current demand load, the rated power of the bidirectional DCDC modules, and the operation group starting numbers within the starting number alternative range, then the rated capacity of the battery modules is acquired, and the second load factors corresponding to the battery modules when the power source operation groups with each operation group starting number are started are determined according to the rated capacity, the current demand load, the battery voltage of the battery modules, and the operation group starting numbers within the starting number alternative range, and the system energy efficiency of the smart battery management system that is mapped by each operation group starting number within the starting number alternative range is finally determined according to the first load factors and the second load factors, thus, the operation group starting number of the power source operation groups may be flexibly configured according to the current load situation of the site/computer room, and unnecessary operation channels are closed, so that the battery modules and the bidirectional DCDC modules operate under the optimal energy efficiency working condition of the system. Through the energy efficiency dynamic optimization algorithm in the real-time working conditions, running at the optimal efficiency point of the system is achieved, thereby solving the problem of relatively-large losses and reduced energy efficiency caused by the fact that the battery modules and the bidirectional DCDC modules are difficult to operate at the optimal efficiency under the actual working conditions for various communication smart lithium battery systems at present.

That is, in the present embodiment, by combining the real-time running working conditions under the current load situation, in a case of meeting and supporting the current demand load, the load factors of the battery modules and the bidirectional DCDC modules when different numbers of the power source operation groups are started are calculated, so that module energy efficiency values respectively corresponding to the battery modules and the bidirectional DCDC modules when the different numbers of the power source operation groups are started are respectively queried from the pre-stored energy efficiency data mapping table according to the load factors of the battery modules and the bidirectional DCDC modules, the optimal operation group starting number with the highest system energy efficiency is determined according to the queried module energy efficiency values respectively corresponding to the battery modules and the bidirectional DCDC modules, and the power source operation groups with the optimal operation group starting number are started, while other idle power source operation groups are closed, thereby obtaining the most suitable operation number of the power source operation groups through the dynamic optimization algorithm so as to adjust the energy efficiency of the bidirectional DCDC modules and the battery modules to the optimal energy efficiency, making the energy efficiency of the entire system be maintained at the optimal state in real time, and solving the technical problem of low system energy efficiency in the smart battery management system.

In a possible implementation, the step of starting and running the power source operation groups with the optimal operation group starting number includes:

Step E10: the power source operation groups with the optimal operation group starting number are sequentially selected from all the power source operation groups of the smart battery management system by means of polling for starting and running at an interval of preset polling cycles.

To assist in understanding the principle or concept of the embodiment of the present application, the following description is continued with reference to Example 1 above:

In Example 1, a strategy that N battery modules reuse one bidirectional DCDC module is implemented within the power source operation groups with the bidirectional DCDC modules are started and run. That is, one of the N battery modules is connected alternately for running, while the other N-1 battery modules are shut down. In terms of the reuse strategy, time-division multiplexing may be adopted. For example, each battery module is discharged for a period of time (such as 10 minutes) and then switched to the next battery module for discharge. It is also possible to set a certain switching condition, such as discharging each battery module to a preset threshold voltage or a preset threshold battery capacity, and then switching to the next battery module for discharge, thereby ensuring that all the battery modules can participate in running, improving the balance and consistency of running of the battery modules, prolonging the service life of the battery modules, and improving the reliability of the smart battery management system.

In addition, when the bidirectional DCDC modules are switched alternately, a duty cycle of a driving signal of a switch tube can be controlled to avoid sudden changes. That is to say, the power of the bidirectional DCDC module newly started by polling gradually increases, while the power of the replaced and closed bidirectional DCDC module gradually decreases until the bidirectional DCDC module is shut down, thereby further improving the system energy efficiency of the smart battery management system.

In the present embodiment, the power source operation groups with the optimal operation group starting number are sequentially selected from all the power source operation groups of the smart battery management system by means of polling for starting and running at the interval of the preset polling cycles, so that the power source operation groups run alternately, and it is ensured that the running time of the power source operation groups is roughly the same. The DC/DC modules and the battery modules actively run alternately, and modules that are not run can be shut down or be in deep sleep, which ensures that all the battery modules and the bidirectional DCDC modules can participate in running and improves the balance and consistency of operation of the battery modules and the bidirectional DCDC modules. The alternate running mode of the power source operation groups also indirectly reduce the running time of each module, thereby prolonging the service life of the power source operation groups and improving the reliability of the system.

To assist in understanding the technical principle of the embodiment of the present application, a specific embodiment is listed:

Assuming that a company provides telecommunication operators with communication smart lithium battery products applied to base stations and computer rooms, battery cells are selected from mainstream lithium iron phosphate, which has the characteristics of a high power density, long cycle life, etc., the nominal capacity of a module is 100Ah/4.8kWh, and the maximum discharge capability is 1C. Due to the maximum power conversion capability of the bidirectional DC/DC topology built into a battery being 55V*100A, the power limit is designed to be 5.5 kW.

Assuming that a maximum load of a central computer room is 100 kW, a maximum standby power capability is required to be up to 10 hours. Therefore, it is necessary to configure the number of batteries of this type to be 100*10/4.8=208. This is significant asset investment for users. According to test data, it is shown that in a 0.1C charging and discharging scenario, the watt-hour efficiency of a battery cell is 97.2%, and the efficiency of the bidirectional DC/DC topology is 96.5%. Therefore, the overall energy efficiency of the battery module is 97.2%*96.5%=93.8%. Obviously, this product has serious problems of high investment and low energy efficiency in the scenario of long-term standby power in the central computer room.

To reduce the cost and improve the energy efficiency, the following design is required first:

1) the battery module is transformed: the built-in DC/DC conversion unit and a DSP control part thereof are separated and taken out, necessary casings and protection are added, and then an independent DC/DC module is formed; the battery cells, the BMUs, and other parts are retained in the battery module, while related functions remain unchanged; and

2) the new battery module and the DC/DC module (also known as the bidirectional DCDC module) are connected to the BCMU through the CAN, and are controlled and managed by the BCMU; output ends of the plurality of lithium battery modules are electrically connected in parallel, and then electrically connected to an external DC/DC module to form an operation group; and all the DC/DC modules are intensively and externally placed to form a power conversion subsystem, and the other ends are connected to the 48V busbar in parallel.

Next, configuration management of the system can be performed according to the load of the site and user requirements:

1) configuration of the DC/DC modules: configuration is performed according to certain rules based on the load situation of the site. The maximum load of the computer room is 100 kW, while the load of the single DC/DC module is 5.5 kW, so it is necessary to configure at least 100/5.5=19 modules;

2) configuration of the battery modules: as mentioned earlier, at least 100*103/(48*10)=209 battery modules need to be configured;

3) preliminary grouping configuration: preliminary grouping is performed according to the number of the DC/DC modules and the battery modules. As mentioned earlier, the ratio of the DC/DC modules to the battery modules is 19:209, and preliminary grouping is completed according to 1:11.

4) Adjustment of grouping configuration: the number of the DC/DC modules and the battery modules is adjusted to ensure N+1 redundant backup. Therefore, the configuration is adjusted as: the configuration ratio of the DC/DC modules to the battery modules is 20:220, with grouping at 1:11.

Obviously, in an originally traditional configuration solution, 209 batteries and 209 DC/DC units are required, while in the solution of the present specific embodiment, only 220 batteries and 20 DC/DC modules are required. The hardware cost is greatly reduced, while the number of the DC/DC modules (power conversion nodes) is sharply decreased, and the energy efficiency is also significantly improved.

Next, the energy efficiency of the DC/DC modules and the battery modules is tested to obtain the energy efficiency data of the DC/DC modules and the battery modules under different running temperatures and different power or rates, and a table is generated and saved in BCMU software for use:

1) DC/DC module energy efficiency: different optimal conversion efficiency at the testing points with the full range of load factor ranging from 0% to 100% under different typical temperatures and different input/output pressure differences (one-phase conversion circuit needs to be turned off under light load) is tested, with a 5% interval between the testing points of the load factor. The following is a set of actual testing data, with the former being the load factor and the latter being the corresponding efficiency value: {10%, 96.5%}, {20%, 97.2%}, {30%, 98.5%}, {40%, 98.2%}, {50%, 98.5%}, {60%, 98.4%}, {80%, 98.1%}, {90%, 97.8%}, {100%, 97.6%};

Battery module energy efficiency: different watt-hour efficiency at the testing points from 0.1 C to 1.0 C under different typical temperature conditions is tested, with an interval point of 0.05 C. Test data shows that the energy efficiency values of the battery modules are substantially in an approximate linear decreasing relationship with the load factor (current value). For example, the efficiency at 0.2 C is 97.1%, the efficiency at 0.5 C is 95.6%, and the efficiency at 1.0 C is 91.5%.

After starting and running the lithium battery system, the BCMU dynamically adjusts the running parameters of the DC/DC modules and battery modules according to the current working conditions, so as to enable the energy efficiency of the entire system to be highest. Assuming that all batteries and DC/DC modules in the current system can operate normally, the system is in the discharge process, the system load is 33 kW, and the discharge voltage is 49V:

1) the maximum operation group number is acquired: all the operation groups in the normal running state are traversed, and the number Kmax=20;

2) the operation group number range is confirmed: the minimum value for the operation groups is Kmin=33*10³/(49*100)=7;

$$\text{minimum value } Kmin=max(PL/Pd,PL/(Vb*Ir))$$

$$Kmin=33*10^3/(55*100)$$

3) all possible system efficiency within the full range is traversed. The main steps are as follows:

(1) the current operation group number is m=Kmin=7;
(2) the efficiency value e1 that is closest to the working conditions of the running voltage and ambient temperature, and the load factor of 33*10³/(m*5500) of the modules is searched from the energy efficiency data record table of the DC/DC modules;
(3) the efficiency value e2 that is closest to the working condition of the load factor being 33*10³/(m*49*100) of the modules is searched from the energy efficiency data record table of the battery modules;
(4) the current system efficiency e=e1*e2 is calculated;
(5) the current operation group number is m+1;
(6) steps (2) to (5) are repeatedly run to obtain all system efficiency values within the range of the operation group number m from Kmin to Kmax;

4) the maximum value, that is, the operation group numerical value with the optimal system efficiency, is found from the system efficiency values. Assuming that the numerical value k=18, it represents that when the load factor of the DC/DC modules is 33*10³/(18*5500)=33.3% and the discharge current of the battery modules is 33*10³/(18*49*100) =0.37C, the overall energy efficiency of the system is the highest;

5) starting and running of 18 DC/DC modules are controlled with a load factor of 33.3%. At this point, one interleaved parallel channel in the 18 modules is closed to be free of operation so as to improve the energy efficiency; and the other two DC/DC modules are all shut down.

6) In the operation group with the DC/DC modules being started and run, one of 11 battery modules needs to be connected alternately for running, while the other 10 battery modules are shut down. The plurality of battery modules reuse one DC/DC module, and the reuse strategy may adopt the simplest time-division multiplexing method. For example, each battery module is discharged for 10 minutes and then switched to the next battery module for discharge.

7) From the perspective of the system, it is necessary to implement an alternate running strategy for all 20 operation groups, with 18 operation groups running at the same moment; that is to say, alternation of the operation groups is initiated every 110 minutes. When the DC/DC modules are switched alternately, it should be noted that the duty cycle of the driving signal of the switch tube does not experience sudden changes; and that is to say, the power of the new DC/DC module gradually increases, while the power of the replaced DC/DC module gradually decreases until the replaced DC/DC module is shut down.

The alternate running of the operation groups ensures that all the battery modules can participate in running, thereby improving the balance and consistency of the battery modules, especially those that operate under a low current for a long time.

It should be noted that the above specific embodiment is only used to assist in understanding the technical concept of the embodiment of the present application and does not constitute a limitation on the present application. For those ordinarily skilled in the art, other changes or variations in different forms can further be made on the basis of the above description. It is unnecessary and impossible to enumerate all the implementations here. Any modification, equivalent replacement, improvement and the like made within the spirit and principle of the present specific embodiment shall all be contained in the scope of protection of the present application.

In addition, Example 2 of the present application further provides a dynamic optimization algorithm for a smart battery management system during a charging process. Due to the smart battery management system being in the charging process, the load factor is autonomous and controllable. Therefore, the optimization algorithm is relatively simple: on the premise of ensuring power supply safety, the charging current is reduced as much as possible to improve the energy efficiency of the battery cells and even the entire system. Assuming that the minimum charging current of the battery is 0.05 C and the maximum charging current is 1.0 C, the charging optimization algorithm is briefly described as follows:

1) the efficiency values e1 of all the testing points of the DC/DC module under the charging current of 0.05C-1.0C are traversed;
2) the efficiency values e2 of all the testing points of the battery module under the charging current of 0.05C-1.0C are traversed;
3) the system efficiency e=e1*e2 at all recorded testing points under 0.05C-1.0C is calculated;
4) the efficiency at all the recorded testing points is sorted from high to low, and the testing point in which the system efficiency e is highest is selected as an optimal charging current;
5) if there are operation and maintenance requirements (for example, in a scenario of frequent power outages, a charging current of 0.2C or above is required to complete battery replenishment as soon as possible) for the charging current, the testing point in which the testing point current ≥0.2C and the highest efficiency e is required to be selected from a sorting table; and
6) all operation groups (DC/DC modules and battery modules) that can run normally run at the optimal charging current.

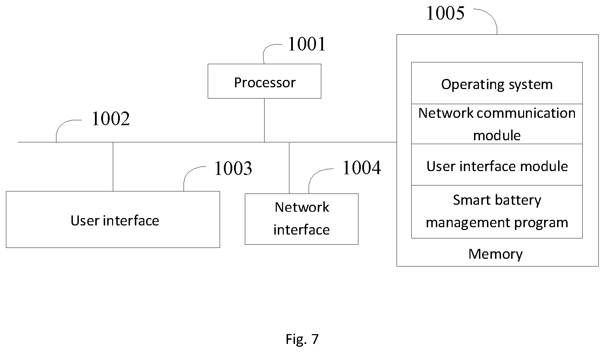

In addition, an embodiment of the present application further provides an electronic device. Referring to Fig. 7, Fig. 7 is a schematic diagram of a hardware structure of the electronic device provided by an embodiment of the present application. As shown in Fig. 7, the electronic device may include: a processor 1001 such as a central processing unit (CPU), a communication bus 1002, a user interface 1003, a network interface 1004, and a memory 1005. The communications bus 1002 is configured to implement connection and communication between these components. The user interface 1003 may include a display and an input unit such as a keyboard. The user interface 1003 may further include a standard wired interface and a wireless interface. The network interface 1004 may include a standard wired interface and a wireless interface (such as a wireless-fidelity (WI-FI) interface). The memory 1005 may be a high-speed random access memory (RAM), and may also be a stable non-volatile memory (NVM), such as a disk memory. The memory 1005 can further be a storage device independent of the aforementioned processor 1001.

Those skilled in the art may understand that a structure shown in Fig. 7 constitutes no limitation on the electronic device, and may include more or fewer components than those shown in the figure, or a combination of some components, or different component arrangements. As shown in Fig. 7, the memory 1005 used as a storage medium may include an operating system, a data storage module, a network communication module, a user interface module, and a smart battery management program.

In the electronic device shown in Fig. 7, the network interface 1004 is mainly configured to be in data communication with other devices; and the user interface 1003 is mainly configured to be in data interaction with users. The processor 1001 and the memory 1005 in the present embodiment can be arranged in the electronic device. The electronic device calls the smart battery management program stored in the memory 1005 through the processor 1001 and performs the smart battery management method provided by any one of the above embodiments.

A terminal provided by the present embodiment belongs to the same inventive concept with the smart battery management method provided in the above embodiments. Technical details not described in detail in the present embodiment can refer to any of the above embodiments, and the present embodiment has the same beneficial effects as performing the smart battery management method.

In addition, an embodiment of the present application further provides a readable storage medium, the readable storage medium is a computer storage medium, the computer storage medium may be a non-volatile computer-readable storage medium, the computer readable storage medium stores a smart battery management program thereon, and the smart battery management program, when executed by a processor, implements the smart battery management method as described above.

The various embodiments of the electronic device and the computer readable storage medium in the embodiments of the present application can refer to the various embodiments of the smart battery management method in the present application, and will not be repeated here.

Terms "including", "containing", or any other variations herein are intended to cover non-exclusive inclusions, such that a process, method, item or system that includes a series of elements not only includes those elements, but also includes other elements that are not explicitly listed, or further includes elements inherent in such the process, method, item or system. Without more limitations, elements defined by a statement "including one" do not exclude the existence of other identical elements in the process, method, item or system that includes the said elements.

The above serial numbers of the embodiments of the present application are only for descriptions and do not represent the advantages and disadvantages of the embodiments.

According to the descriptions in the foregoing implementations, those skilled in the art may clearly learn that the methods in the above embodiment may be implemented by means of software and a necessary universal hardware platform, certainly, the method may also be implemented by means of hardware, and however, in many cases, the former is the better implementation. Based on such understanding, the technical solutions of the present application essentially, or the part making contributions to the prior art, may be embodied in the form of a software product. A computer software product is stored in the storage medium (such as the ROM/RAM, a magnetic disk, or an optical disc) as described above, including several instructions used to enable an electronic device (which may be a mobile phone, a computer, a server, an air conditioner, a network device, or the like) to execute the methods described in all the embodiments of the present application.

The above descriptions are only some embodiments of the present application and do not limit the patent scope of the present application. Equivalent structures or equivalent process transformations made using the content of the specification and accompanying drawings of the present application, or directly or indirectly applied in other related technical arts, are also included in the scope of patent protection of the present application in the same way.

## Claims

1. A smart battery management system, wherein the smart battery management system comprises a BCMU component and a plurality of power source operation groups, the power source operation groups are respectively connected to the BCMU component, the power source operation groups are used to be connected to a busbar in parallel, and each power source operation group comprises:

   a plurality of battery modules, the battery modules being respectively connected to the BCMU component; and a bidirectional DCDC module, the battery modules being connected to an input end of the bidirectional DCDC module in parallel, an output end of the bidirectional DCDC module being used to be connected to the busbar, and the battery modules reusing the bidirectional DCDC module by means of polling.

2. The smart battery management system according to claim 1, wherein each of the battery modules comprises a battery cell unit and a BMU, the BMU is connected to the BCMU component, the battery cell units in the battery modules are connected to the input end of the bidirectional DCDC module in parallel, and the BCMU component controls operation states of the battery cell units through the BMUs.

3. The smart battery management system according to claim 2, wherein each of the battery modules comprises a charge-discharge loop switch, the charge-discharge loop switch is connected between the battery cell unit and the bidirectional DCDC module in series, and the BMU controls the operation state of the battery cell unit by controlling switch-off or switch-on of the charge-discharge loop switch.

4. The smart battery management system according to claim 2, wherein the bidirectional DCDC module is connected to the BCMU component, the bidirectional DCDC module comprises a DCDC conversion unit and a DSP control unit, each BMU is connected to the DSP control unit, the DSP control unit is connected to the BCMU component, the battery cell units in the battery modules are connected to an input end of the DCDC conversion unit in parallel, an output end of the DCDC conversion unit is used to be connected to the busbar, and the battery cell units in the battery modules reuse the DCDC conversion unit by means of polling.

5. A smart battery management method, wherein the smart battery management method is applied to the smart battery management system according to any one of claims 1 to 4, and the smart battery management method comprises:

   acquiring a current demand load and determining the minimum operation group starting number of power source operation groups that meet and support the current demand load;
   determining a starting number alternative range for the power source operation groups according to the minimum operation group starting number;
   determining system energy efficiency of the smart battery management system that is mapped by each operation group starting number within the starting number alternative range; and

selecting the operation group starting number with the highest system energy efficiency within the starting number alternative range as the optimal operation group starting number, and starting and running power source operation groups with the optimal operation group starting number to supply power to a busbar.

6. The smart battery management method according to claim 5, wherein determining the minimum operation group starting number of power source operation groups that meet and support the current demand load comprises:

acquiring rated power of a bidirectional DCDC module, and a battery voltage and a maximum discharge current of a battery module;
calculating a first ratio of the current demand load to the rated power;
calculating a product of the battery voltage and the maximum discharge current, and calculating a second ratio of the current demand load to the product; and
determining the minimum operation group starting number of the power source operation groups that meet and support the current demand load according to a maximum value between the first ratio and the second ratio.

7. The smart battery management method according to claim 6, wherein determining system energy efficiency of the smart battery management system that is mapped by each operation group starting number within the starting number alternative range comprises:

determining first load factors corresponding to the bidirectional DCDC modules when the power source operation groups with each operation group starting number are started according to the current demand load, the rated power, and the operation group starting numbers within the starting number alternative range;
acquiring a rated capacity of the battery module, and determining second load factors corresponding to the battery modules when the power source operation groups with each operation group starting number are started according to the rated capacity, the current demand load, the battery voltage, and the operation group starting numbers within the starting number alternative range; and
determining the system energy efficiency of the smart battery management system that is mapped by each operation group starting number within the starting number alternative range according to the first load factors and the second load factors.

8. The smart battery management method according to claim 7, wherein determining the system energy efficiency of the smart battery management system that is mapped by each operation group starting number within the starting number alternative range according to the first load factors and the second load factors comprises:

obtaining first module energy efficiency of the bidirectional DCDC module that is mapped by each first load factor by querying from a pre-stored first energy efficiency data mapping table;
obtaining second module energy efficiency of the battery module that is mapped by each second load factor by querying from a pre-stored second energy efficiency data mapping table; and
determining the system energy efficiency of the smart battery management system that is mapped by each operation group starting number within the starting number alternative range according to a product of the first module energy efficiency and the second module energy efficiency.

9. The smart battery management method according to claim 5, wherein starting and running power source operation groups with the optimal operation group starting number comprises:
sequentially selecting the power source operation groups with the optimal operation group starting number from all the power source operation groups of the smart battery management system by means of polling for starting and running at an interval of preset polling cycles.

10. An electronic device, wherein the electronic device comprises the smart battery management system according to any one of claims 1 to 4, a memory, a processor, and a smart battery management program stored on the memory and able to be run on the processor, and the smart battery management program, when executed by the processor, implements steps of the smart battery management method according to any one of claims 5 to 9.

11. A readable storage medium, wherein the readable storage medium is a computer readable storage medium, the computer readable storage medium stores a smart battery management program thereon, and the smart battery management program, when executed by a processor, implements steps of the smart battery management method according to any one of claims 5 to 9.

Fig. 1

Fig. 2

Fig. 3

Fig. 4

S10

Acquire a current demand load and determine the minimum operation group starting number of power source operation groups that meet and support the current demand load

S20

Determine a starting number alternative range for the power source operation groups according to the minimum operation group starting number

S30

Determine system energy efficiency of a smart battery management system that is mapped by each operation group starting number within the starting number alternative range

S40

Select the operation group starting number with the highest system energy efficiency within the starting number alternative range as the optimal operation group starting number, and start and run the power source operation groups with the optimal operation group starting number to supply power to a busbar

Fig. 5

Fig. 6

1005

1001

1002

1003   1004

| Processor |
|---|

| Operating system |
|---|
| Network communication module |
| User interface module |
| Smart battery management program |
| Memory |

| User interface |
|---|

| Network interface |
|---|

Fig. 7

## INTERNATIONAL SEARCH REPORT

| International application No. |
|---|
| **PCT/CN2023/116307** |

### A. CLASSIFICATION OF SUBJECT MATTER

H02J7/00(2006.01)i; H02M3/155(2006.01)i; H02M1/088(2006.01)i; H02M1/14(2006.01)i

According to International Patent Classification (IPC) or to both national classification and IPC

### B. FIELDS SEARCHED

Minimum documentation searched (classification system followed by classification symbols)

IPC: H02J H02M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 电源, 电池, 功率, 直流, DC, 分时, 复用, 轮询, 效能, 效率, 能效, power, battery, direct current, reuse, efficiency

### C. DOCUMENTS CONSIDERED TO BE RELEVANT

| Category* | Citation of document, with indication, where appropriate, of the relevant passages | Relevant to claim No. |
|---|---|---|
| PX | CN 116260208 A (ZTE CORP.) 13 June 2023 (2023-06-13) <br> claims 1-11 | 1-11 |
| X | WO 2022198635 A1 (HUAWEI DIGITAL POWER TECHNOLOGIES CO., LTD.) 29 September 2022 (2022-09-29) <br> description, page 5, line 1 to page 12, line 14, and figures 1-7 | 1-4 |
| A | WO 2022198635 A1 (HUAWEI DIGITAL POWER TECHNOLOGIES CO., LTD.) 29 September 2022 (2022-09-29) <br> description, page 5, line 1 to page 12, line 14, and figures 1-7 | 5-11 |
| A | CN 107404149 A (GUANGZHOU ACQUISITIVE HUAI ENERGY TECHNOLOGY CO., LTD.) 28 November 2017 (2017-11-28) <br> entire document | 1-11 |
| A | CN 112968502 A (POWERAMP TECHNOLOGY LIMITED) 15 June 2021 (2021-06-15) <br> entire document | 1-11 |
| A | CN 114598008 A (TSINGHUA UNIVERSITY) 07 June 2022 (2022-06-07) <br> entire document | 1-11 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 October 2023** | **10 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116307**

| Patent document cited in search report | | | Publication date (day/month/year) | Patent family member(s) | | | Publication date (day/month/year) |
|---|---|---|---|---|---|---|---|
| CN | 116260208 | A | 13 June 2023 | None | | | |
| WO | 2022198635 | A1 | 29 September 2022 | None | | | |
| CN | 107404149 | A | 28 November 2017 | CN | 207234517 | U | 13 April 2018 |
| CN | 112968502 | A | 15 June 2021 | CN | 214707224 | U | 12 November 2021 |
| CN | 114598008 | A | 07 June 2022 | None | | | |

Form PCT/ISA/210 (patent family annex) (July 2022)

**REFERENCES CITED IN THE DESCRIPTION**

**Patent documents cited in the description**

- CN 202211219724